# EUROPEAN PATENT SPECIFICATION

(11) **EP 4 135 972 B1**
(45) Date of publication and mention of the grant of the patent: **23.09.2026**
(21) Application number: 21717061.2
(22) Date of filing: 07.04.2021
(51) Int. Cl.: B29D 11/00, B29C 33/00, B29C 33/38, C25D 1/10, C25D 1/22, C25D 3/56, G02B 3/00, C25D 3/12

(54) **METHOD FOR PRODUCING A MOLD**
VERFAHREN ZUR HERSTELLUNG EINER FORM
PROCÉDÉ DE PRODUCTION D'UN MOULE

(30) Priority: 14.04.2020 EP 20315165
(43) Date of publication of application: 22.02.2023
(73) Proprietor: Essilor International, 94220 Charenton-Le-Pont (FR)
(72) Inventor: GACOIN, Eric, 94220 CHARENTON-LE-PONT (FR); THOMAS, Michèle, 94220 CHARENTON-LE-PONT (FR); HENRION, Sébastien, 94220 CHARENTON-LE-PONT (FR)
(74) Representative: Cabinet Novitech
(86) International application number: PCT/EP2021/059004
(87) International publication number: WO 2021/209291

(56) References cited:
- WO-A1-2019/124353
- US-A- 4 737 447
- US-A- 5 440 798
- US-A1- 2019 324 293
- US-A1- 2020 012 123

## Description

### FIELD OF THE DISCLOSURE

The disclosure relates to a method for producing a mold for an optical lens and to a mold for an optical lens obtained using a method according to the disclosure.

### BACKGROUND OF THE DISCLOSURE

It is known to provide optical lenses with at least one complex surface, such as a progressive additional surface or a surface bearing a plurality of optical elements.

Such complex surfaces may be tedious and costly to produce. For example, such complex surfaces may be obtained by machining a surface or using additive manufacturing. Such methods for obtaining complex surfaces are time consuming and are not compatible with producing a large number of optical lenses having such complex surfaces.

A much preferred method for producing great number of optical lenses having the same complex surface consists in molding the optical lenses in molds in which at least one surface of the molding insert or cavity bears the complexity of the optical surface of the optical lens to be obtain.

Advantageously, the mold may be reused to produce a great number of optical lenses.

However, the surface of the mold bearing the complexity still needs to be manufactured.

Many different methods of obtaining molds and especially lens mold pieces having a surface bearing complexity are known. For example, such surfaces may be obtained using machining method or additive manufacturing method.

Machining such molds is a very expensive process and it is not so easy to carry out optical tests on the surface of the mold. Manufacturing precisely and testing an optical lens may be easier and more efficient than the surface of a mold.

Therefore, there is a need for a method that could reproduce a complex surface of an optical lens

US 5 440 798 A discloses a method for producing a mold obtained by providing a monolithic optical lens element having at least a finished optical surface.

### SUMMARY OF THE DISCLOSURE

To this end, the disclosure proposes method for producing a mold, wherein the method comprises:
- providing a monolithic optical lens element having at least a finished optical surface, the monolithic optical lens element being made of an organic material;
- coating the finished optical surface with an electrically conductive material;
- depositing on the coated finished optical surface a layer of metal to produce a metal element having a surface which is a replication of the finished optical surface;
- separating the monolithic optical lens element and the metal element, the metal element forming a mold replicating the finished optical surface of the monolithic optical lens element,
wherein prior to providing the monolithic optical lens element, the finished optical surface of said monolithic optical lens element is obtained by using a digital surfacing method.

Advantageously, the method of the disclosure allows obtaining a mold reproducing a finished optical surface of a monolithic optical lens. According to the invention, a finished optical surface of a monolithic optical lens is manufactured using digital surfacing and when such finished optical surface is considered acceptable, said finished optical surface may be replicated by forming a mold.

The obtained mold may then be used to obtain a plurality of optical lenses having the same finished optical surface as the original monolithic optical lens.

According to further embodiments which can be considered alone or in combination:
- the finished optical surface is a progressive optical surface; and/or
- the finished optical surface comprises:
   ∘ a refraction area having a first curvature and
   ∘ a plurality of optical elements placed on at least part of the finished optical surface, each optical element having at least a second curvature; and/or
- at least a part of the plurality of optical elements are placed on at least a ring on the finished optical surface; and/or
- the plurality of optical elements are placed on concentric rings on the the finished optical surface; and/or
- the mean sphere of all the optical elements placed on a concentric ring is identical; and/or
- the mean sphere of at least part of the optical elements varies from the center to the edge of the finished optical surface; and/or
- the mean sphere of at least part of the optical elements decreases from the center to the edge of the finished optical surface; and/or
- the mean sphere of at least part of the optical elements increases from the center to the edge of the finished optical surface; and/or
- at least part of the optical elements are contiguous; and/or
- the first and second curvatures are different; and/or
- the first and second curvatures are the same; and/or
- the plurality of optical elements are diffractive, for example bi-fresnel; and/or
- the method further comprises after having separated the monolithic optical lens element and the metal element, removing the electrically conductive material coating from the metal element; and/or
- removing the conductive material coating from the metal element is done by lustering; and/or
- removing the conductive material coating from the metal element is done by slight polishing; and/or
- removing the conductive material coating from the metal element is done by wiping; and/or
- removing the conductive material coating from the metal element is done by elecro-chemical stripping; and/or
- the coating of electrically conductive material has a thickness greater than or equal to 1nm, for example greater than or equal to 10nm, and smaller than or equal to 5µm; and/or
- the electrically conductive material is copper; and/or
- the electrically conductive material is a silver-based material, for example silver; and/or
- the electrically conductive material is obtained by using a vapor deposition method or a sputtering method or a spray deposition method or an atomic layer deposition method; and/or
- the metal element is obtained by using an ElectroChemical method; and/or
- the metal element is a nickel alloy; and/or
- the metal element has a thickness greater than or equal to 0.1 mm and smaller than or equal to 5 mm; and/or
- prior to providing the monolithic optical lens element, the finished optical surface of said monolithic optical lens element is obtained by using a digital surfacing method; and/or
- prior to providing the monolithic optical lens element, the finished optical surface of said monolithic optical lens element is obtained by using a mold injection method or a casting method.

The disclosure further relates to a mold obtained by providing a monolithic optical lens element having at least a finished optical surface, the monolithic optical lens element being made of an organic material;
- coating the finished optical surface with an electrically conductive material;
- depositing on the coated finished optical surface a layer of metal to produce a metal element having a surface which is a replication of the finished optical surface;
- separating the monolithic optical lens element and the metal element, the metal element forming a mold replicating the finished optical surface of the monolithic optical lens element,
wherein prior to providing the monolithic optical lens element, the finished optical surface of said monolithic optical lens element is obtained by using a digital surfacing method.

### BRIEF DESCRIPTION OF THE DRAWINGS

Embodiments of the disclosure will now be described, by way of example only, and with reference to the following drawings in which:
- Figure 1 illustrates a chart-flow embodiment of the method for determining a mold for a lens element according to the disclosure,
- Figure 2 illustrates a plan view of a monolithic optical lens element having a finished surface to be replicated,
- Figure 3 illustrates a coated monolithic optical lens element according to an embodiment of the disclosure, and
- Figure 4 illustrates an exploded view of a mold for a lens element according to an embodiment of the disclosure.

Elements in the figures are illustrated for simplicity and clarity and have not necessarily been drawn to scale. For example, the dimensions of some of the elements in the figure may be exaggerated relative to other elements to help to improve the understanding of the embodiments of the present disclosure.

### DETAILED DESCRIPTION OF EMBODIMENTS OF THE DISCLOSURE

The present disclosure relates to a method for producing a mold for obtaining an optical element such as a lens element. In the sense of the disclosure a mold may be only a surfacic mold that requires to be completed by other molding elements.

In the context of the present disclosure, the term "lens element" can refer to lens blank having a finished optical surface and an unfinished face where the unfinished is intended to be surfaced to provide an uncut optical lens, an uncut optical lens having both opposite surface finished or to an ophthalmic lens, for example having a progressive optical surface.

A progressive optical surface usually comprises a zone of far vision, a zone of near vision, an intermediate vision region, a main meridian of progression passing through these three zones. The document FR-2 699294, which may be referred to for further details, describes in its preamble the various elements of a progressive multifocal ophthalmic lens.

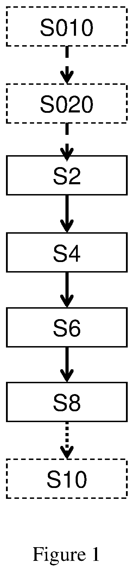

As illustrated on figure 1, a method according to the present disclosure comprises at least:
- a providing step S2,
- a coating step S4,
- a depositing step S6, and
- a separating step S8.

A monolithic optical lens element having at least a finished optical surface is provided during the providing step S2.

The monolithic optical lens element is made of an organic material, for example polycarbonate material. The monolithic optical lens element may be optically transparent, as an optical lens, alternatively the monolithic optical lens element may not be transparent.

Typically, the monolithic optical lens element has a thickness greater than or equal to 0.5 mm and smaller than or equal to 30 mm.

The finished optical surface of the monolithic optical lens element may correspond to a progressive optical surface or a spherical surface or an aspheric surface or a sphero-toric surface, or a regressive surface or more generally any free form surface.

The finished optical surface of the monolithic optical lens element may comprise engravings such as reference markings that may be replicated with the method of the disclosure.

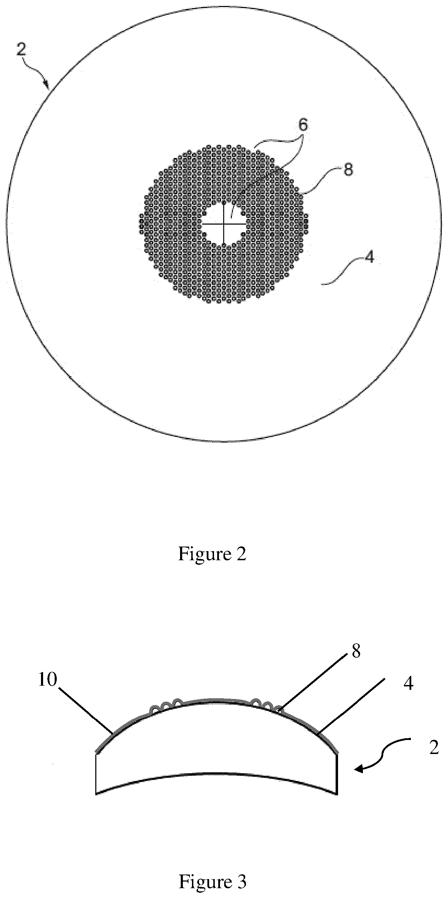

For example, as illustrated on figure 2, the monolithic optical lens element 2 may have a finished optical surface 4 comprising:
- a refraction area 6 having a first curvature and
- a plurality of optical elements 8 placed on at least part of the finished optical surface, each optical element having at least a second curvature.

The finished optical surface may correspond to a surface of a lens element to be adapted for a person and intended to be worn in front of an eye of said person to prevent or at least slow down a progression of abnormal refractions of the eye such as myopia or hyperopia. However, it appears clearly to the person skilled in the art that the lens element may have any optical function, for example an optical function not adapted to the person.

The first curvature of the refraction area 6 may correspond to a first refractive power, for example based on the prescription of the eye of the person. The prescription is adapted for correcting the abnormal refraction of the eye of the person.

The term "prescription" is to be understood to mean a set of optical characteristics of optical power, of astigmatism, of prismatic deviation, determined by an ophthalmologist or optometrist in order to correct the vision defects of the eye, for example by means of a lens positioned in front of his eye. For example, the prescription for a myopic eye comprises the values of optical power and of astigmatism with an axis for the distance vision.

For example, the shape of a refraction area 6 is spherical. The shape of the opposite surface may be configured so that the refraction area has an optical function of focusing an image on the retina.

For example, the shape of said second face is sphero-torical. Advantageously, the shape of said second face is aspherical and calculated by an optical optimization such that every light beam incident on the refraction area 6 is focused on the retina of the wearer when the lens is worn.

The refraction area 6 is preferably formed by the area not covered by any optical element of the plurality of optical elements 8. In other words, the refractive area is the complementary area to the areas formed by the plurality of optical elements 8.

The plurality of optical elements may have a contour shape inscribable in a circle having a diameter greater than or equal to 50 µm mm and smaller than or equal to 3.0 mm. The circle may be a planar projection of the surface of the optical element, for example in a plane orthogonal to the axis of symmetry of the optical element.

According to different embodiments of the disclosure, the abnormal refraction of the eye is myopia, hyperopia or astigmatism.

As illustrated on figure 2, the finished surface 4 may comprise a plurality of optical elements 8.

In the sense of the disclosure, the term "plurality of" is to be understood as "at least three".

At least one optical element of the plurality of optical elements 8 has a second curvature.

The second curvature may be different from the first curvature. Typically, the second curvature may be configured so that in combination with the opposite surface of a final optical lens, the plurality of optical elements 8 has an optical function of focusing an image in front of and/or behind the retina of the person using such optical lens.

In the sense of the disclosure, "focusing" is to be understood as producing a focusing spot with a circular section that can be reduced to a point in the focal plane.

Advantageously, such optical function of the optical elements produces an optical signal that inhibits the deformation of the retina of the eye of the wearer, allowing to prevent or at least slow down the progression of the abnormal refraction of the eye of the person wearing the lens element 2.

When the abnormal refraction of the eye of the person corresponds to myopia the optical elements 8 have an optical function of focusing an image in front of the retina of the eye of the wearer when worn by the wearer.

When the abnormal refraction of the eye of the person corresponds to hypermetropia the optical elements 8 have an optical function of focusing an image behind the retina of the eye of the wearer when worn by the wearer.

The second curvature may be the same as the first curvature.

According to an embodiment of the disclosure, at least part, for example all of the optical elements are arranged to provide a diffractive optical function on the final optical lens.

Preferably, at least 30%, for example at least 80%, for example all, of the optical elements have an optical function of focusing an image on a position other than the retina.

The method may comprise a molding step S010 prior to the providing step 2. During the molding step the finished optical surface of the monolithic optical lens element is obtained by using a mold injection method or a casting method.

Having a molding step is particular advantageous when the finished optical surface comprising a refraction area 6 having a first curvature and a plurality of optical elements placed on at least part of the finished optical surface, each optical element having at least a second curvature.

The method comprises additionally to the molding step S010 and prior to the providing step S2 a machining step S020. During the machining step S020, the finished optical surface of the monolithic optical lens element is obtained by using a digital surfacing method.

Having a machining step is particular advantageous when the finished optical surface is a progressive surface.

The manufacturing of the finished optical surface may comprise a compensation step during which error introduced by the machining tool are measured and compensated for during the machining step.

The finished optical surface of the monolithic optical lens element may be determined taking into account a transfer law. The transfer law corresponds to the transformations to apply to the shape of the finished optical surface for compensating modifications of the surface induced either when producing the mold or during the molding process itself.

During the coating step S4, the finished optical surface 4 is coated with an electrically conductive material 10 as illustrated on figure 3.

Any suitable technique, such for example as spraying or/and vapor deposition and/or sputtering and/or atomic layer deposition, may be used to apply the coating 10 to the finished optical surface 4, as shown in figure 3. Atomic layer deposition technics are very effective for the deposition of high quality nanometric-thick layer. Atomic layer deposition indeed allows deposition of highly conformal films and further involves the use of relatively low temperatures which is beneficial when working with organic lenses. Advantageously, atomic layer deposition allows the replication of a finished surface with a very high accuracy.

The coating of electrically conductive material may have a thickness greater than or equal to 1nm, for example greater than or equal to 10nm, and smaller than or equal to 5µm.

Preferably when the finished optical surface comprises a plurality of optical elements the coating of electrically conductive material has a thickness greater than or equal to 1nm, for example greater than or equal to 10nm, and smaller than or equal to 1µm.

According to an embodiment of the disclosure the electrically conductive material is copper. Advantageously copper provides the best ratio conductivity versus price.

Alternatively, so as to increase the conductivity the electrically conductive material may be a silver-based material, for example silver.

During the depositing step S6, a layer of metal to produce a metal element having a surface which is a replication of the finished optical surface is deposited on the coated finished optical surface. In forming the metal element any suitable electrolytic deposition process known to the art can be employed.

According to a preferred embodiment of the disclosure, the metal element is a nickel alloy, for example nickel.

The thickness of the metal element is preferably greater than or equal to 0.1 mm and smaller than or equal to 5 mm.

The thickness of the metal element may be adjusted depending on the molding process in which the mold obtained by the method of the disclosure is intended to be used.

For example, if the mold obtained is intended to be used for casting the thickness of the metal element is preferably greater than or equal to 0.1 mm and smaller than or equal to 3 mm.

For example, if the mold obtained is intended to be used for injection the thickness of the metal element is preferably greater than or equal to 1 mm and smaller than or equal to 5 mm.

During the separating step S8, the monolithic optical lens element and the metal element are separated. The metal element forms a mold replicating the finished optical surface of the monolithic optical lens element.

As illustrated on figure 1, the method according to the disclosure may further comprise a removing step S10 after the separating step S8. During the removing step S10 the electrically conductive material coating is removed from the formed the metal element.

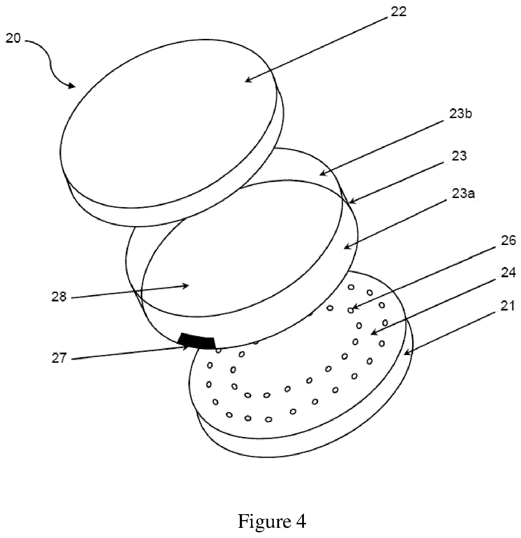

As illustrated in figure 4, a mold 20 for a lens element comprising a plurality of optical elements 8 having a targeted optical function according to the disclosure may comprise a first molding element 21, a second molding element 22 and a gasket 23.

The first molding element 21 may have been obtain using a method of the disclosure and may be in nickel.

The first molding element 21 has a first surface 24 having a first surfacic curvature. For example, the first surface 24 has a spherical surfacic curvature. Alternatively, the first surface 24 may have an aspherical surfacic curvature and/or a cylindrical surfacic curvature and/or a toric surfacic curvature. The first surface 24 of the first molding element 21 corresponds to the surface of the refractive area 6 of a finished optical surface of a monolithic optical lens element to be replicated

The first molding element 21 may further comprises a plurality of surfacic elements 26 having at least a second surfacic curvature that differs from the first curvature of the first surface 24. For example, the surfacic elements 26 of the first surface 24 of the first molding element 21 may correspond to the optical element 8 of the finished optical surface.

Part of, preferably all of the plurality of surfacic elements 26 present an axis of symmetry.

The plurality of surfacic elements 26 have a contour shape being inscribable in a circle having a diameter greater than or equal to 50 µm and smaller than or equal to 3.0 mm. The circle may be a planar projection of the surface of the surfacic element, for example in a plane orthogonal to the axis of symmetry of the surfacic element.

The axis of symmetry of each surfacic elements 26 may correspond to the center of circle in which each surfacic element is respectively inscribed.

The second surfacic curvature of at least one of the plurality of surfacic elements 26 may be a spherical and/or aspherical and/or cylindrical and/or toric surfacic curvature. The plurality of surfacic elements 26 of the first molding element 21 correspond to the optical elements 8 placed on the hold 4 of the lens element 12.

In the sense of the disclosure, aspherical surfacic elements have a continuous evolution over their surface.

For each surfacic element 26, one may define a central zone and a peripheral zone of the surfacic element. The central zone of the surfacic element corresponds to a circular zone comprised in the circle, having the same center as circle and having a radius equal to 0.75 times the radius of the circle. The peripheral zone of the surfacic element corresponds to the concentric ring of the circle distant by at least 0.75 times the radius of the circle.

The mean surfacic curvature of the surfacic element in the central zone of said surfacic element may be different from the mean surfacic curvature of the surfacic element in the peripheral zone of said surfacic element. For example, the mean surfacic curvature in the central zone may be higher than the mean surfacic curvature in the peripheral zone of said surfacic element. Alternatively, the mean surfacic curvature in the central zone may be lower than the mean surfacic curvature in the peripheral zone of said surfacic element.

Along a section of a surfacic element 26 a section passing through the axis of symmetry of said surfacic element, the surfacic curvature of the surfacic element may increase from the intersection between the axis of symmetry and the surface of the surfacic element to a first point, and decrease from said first point to the periphery of the surfacic element.

According to an embodiment of the disclosure, at least one, preferably 50%, more preferably more than 80% of the plurality of surfacic elements 26 have a toric surface. A toric surface is a surface of revolution that can be created by rotating a circle or arc about an axis of revolution (eventually positioned at infinity) that does not pass through its center of curvature. Toric surface elements have two different radial profiles at right angles to each other.

The toric surfacic element may be a pure cylinder, meaning that minimum meridian is zero, while maximum meridian is strictly positive.

According to an embodiment of the disclosure, at least two of the plurality of surfacic elements 26 are non-contiguous. In the sense of the disclosure, two surfacic elements are non-contiguous if for all the paths linking the two surfacic elements one may measure at least along part of each path the first surfacic curvature of the first surface 24 of the first molding element 21.

According to an embodiment of the diclosure, at least two of the plurality of surfacic elements 26 are contiguous. In the sense of the disclosure two surfacic elements are contiguous if for at least one path linking the two surfacic elements one may not measure along said at least one path the first surfacic curvature of the first surface 24 of the first molding element 21.

At least part, for example all of the plurality of surfacic elements 26 may be positioned on a structured network.

According to an embodiment of the disclosure, the disposition of at least part, for example all of the plurality of surfacic elements 26 on the first surface of the first molding element exhibit symmetry of revolution about an axis, for example centered on the geometrical center of the first surface 24 of the first molding element 21. In other words, at least part of the plurality of surfacic element 16 may be regularly distributed along at least one circle centered on the geometrical center of the first surface 24 of the first molding element 21.

According to an embodiment of the disclosure, at least part, for example all of the plurality of surfacic elements 26 are placed on at least a ring on the first surface 24 of the first molding element 21.

The plurality of surfacic elements may further be organized on concentric rings on the first surface of the first molding element. For example, the plurality of surfacic elements 26 are positioned along a set of 11 concentric rings over the entire first surface 24 of the first molding element 21. The concentric rings of surfacic elements may be centered on the geometrical center of the first surface 24 of the first molding element 21.

The mean surfacic curvature of the plurality of surfacic elements 26 may be identical for all the surfacic elements of the same concentric ring. In particular, the mean surfacic curvatures of the central zone of the surfacic elements 26 of the same concentric ring are identical.

According to other embodiments of the disclosure, the plurality of surfacic elements 26 may be organized on different patterns, such as for example square shaped pattern.

The plurality of surfacic elements 26 may be configured so that along at least one section of the first molding element 21, the mean surfacic curvature of the plurality of surfacic elements, for example the mean surfacic curvature of the central zone of the plurality of surfacic elements 26 increases from a point of the section towards the peripheral part of said section.

The plurality of surfacic elements 26 may be configured so that along at least one section of the first molding element 21 passing through a geometric center of the first surface 24 of said first molding element, the mean surfacic curvature of the plurality of surfacic elements 26 increases from said geometric center towards the peripheral part of said section. For example, the mean surfacic curvature of the central zone of the surfacic elements 26 increases along the section passing through the geometric center of the first surface of the first molding element from said geometric center to the periphery. Similarly, the mean surfacic curvature of the peripheral zone of the surfacic elements may increase along the section passing through the geometric center of the first surface of the first molding element from said geometric center to the periphery.

The plurality of surfacic elements 26 may be configured so that along at least one section of the first molding element 21, for example a section passing through the geometric center of the first surface of the first molding element, the mean surfacic curvature of the plurality of surfacic elements 26, for example the mean surfacic curvature of the central zone of the plurality of surfacic element, increases from a first point of said section towards the peripheral part of said section and decreases from a second point of said section towards the peripheral part of said section, the second point being closer to the peripheral part of said section than the first point.

For every circular zone having a radius comprised between 4 and 8 mm comprising a geometrical center of the first surface of the first molding element greater or equal to said radius + 5mm, the ratio between the sum of areas of the plurality of surfacic elements located inside said circular zone and the area of said circular zone is comprised between 20% and 70%.

The mold 20 for the lens element may further comprises a second molding element 22. The second molding element 22 has a second surface. In figure 4, the second surface of the second molding element 22 is not represented as it faces the first surface 24 of the first molding element.

The mold 20 for the lens element may further comprises a gasket 23. The gasket 23 typically has an annular form comprising an inner surface 23a and an outer surface 23b. The gasket 23 further comprises an opening 27.

The gasket 23 seals the first and second molding elements 21 and 22 together to form a molding cavity 28. The molding cavity 28 is defined by the first surface 24 comprising the surfacic elements 26 of the first molding element 21, the second surface 25 of the second molding element 22, and the inner surface 23a of the gasket 23.

The molding cavity 28 of the mold 20 for a lens element 2 is filled with a molding material through the opening 27. Despite being represented in the gasket 23, the opening 27 may alternatively be placed on the first molding element or the second molding element.

For example, the molding material may be a casting material poured into the molding cavity through the opening 27 of the gasket 23. The casting material in the molding cavity is further polymerized into a lens material thereby forming the lens element.

Alternatively, the molding material may be a thermo-plastic material. The thermo-plastic material which is in a first liquid state at a first temperature is injected into the mold cavity 28 through opening 27. During the cooling process, the thermo-plastic material changes from a first liquid state to a second solid state corresponding to the lens material of lens element 2.

The disclosure has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the disclosure, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

## Claims

1. Method for producing a mold (20), wherein the method comprises:
- providing a monolithic optical lens element (2) having at least a finished optical surface (4), the monolithic optical lens element (2) being made of an organic material;
- coating the finished optical surface (4) with an electrically conductive material (10);
- depositing on the coated finished optical surface a layer of metal to produce a metal element having a surface which is a replication of the finished optical surface;
- separating the monolithic optical lens (2) element and the metal element, the metal element forming a mold replicating the finished optical surface of the monolithic optical lens element,
wherein prior to providing the monolithic optical lens element (2), the finished optical surface (4) of said monolithic optical lens element (2) is obtained by using a digital surfacing method.

2. The method according to claim 1, wherein the finished optical surface (4) is a progressive optical surface.

3. The method according to claim 1 or 2, wherein the finished optical surface (4) comprises:
- a refraction area having a first curvature and
- a plurality of optical elements (8) placed on at least part of the finished optical surface, each optical element (8) having at least a second curvature

4. The method according to any of the preceding claims, wherein the method further comprises after having separated the monolithic optical lens element (2) and the metal element, removing the electrically conductive material coating from the metal element.

5. The method according to any of the preceding claims, wherein the coating of electrically conductive material (10) has a thickness greater than or equal to 1nm and smaller than or equal to 5µm.

6. The method according to any of the preceding claims, wherein the electrically conductive material is copper.

7. The method according to any of claims 1 to 5, wherein the electrically conductive material is silver-based material or silver.

8. The method according to any of the preceding claims, wherein the electrically conductive material is obtained by using a vapor deposition method or a sputtering method or a spray deposition method or an atomic layer deposition method.

9. The method according to any of the preceding claims, wherein the metal element is obtained by using an electrochemical method.

10. The method according to any of the preceding claims, wherein the metal element is a nickel alloy.

11. The method according to any of the preceding claims, wherein the metal element has a thickness greater than or equal to 0.1 mm and smaller than or equal to 5 mm.

12. The method according to any of the preceding claims, wherein prior to providing the monolithic optical lens element, the finished optical surface of said monolithic optical lens element is obtained by using a mold injection method or a casting method.

13. A mold (20) obtained by providing a monolithic optical lens element (2) having at least a finished optical surface (4), the monolithic optical lens element (2) being made of an organic material;
- coating the finished optical surface (4) with an electrically conductive material (10);
- depositing on the coated finished optical surface a layer of metal to produce a metal element having a surface which is a replication of the finished optical surface;
- separating the monolithic optical lens element (2) and the metal element, the metal element forming a mold replicating the finished optical surface of the monolithic optical lens element,
wherein prior to providing the monolithic optical lens (2) element, the finished optical surface (4) of said monolithic optical lens (2) element is obtained by using a digital surfacing method.

## Patentansprüche

1. Verfahren zum Produzieren einer Form (20), wobei das Verfahren Folgendes umfasst:
- Bereitstellen eines monolithischen optischen Linsenelements (2) mit wenigstens einer fertigen optischen Oberfläche (4), wobei das monolithische optische Linsenelement (2) aus einem organischen Material gefertigt wird;
- Beschichten der fertigen optischen Oberfläche (4) mit einem elektrisch leitfähigen Material (10);
- Abscheiden einer Schicht aus Metall auf der beschichteten fertigen optischen Oberfläche, um ein Metallelement mit einer Oberfläche zu produzieren, die eine Nachbildung der fertigen optischen Oberfläche ist;
- Separieren des monolithischen optischen Linsenelements (2) und des Metallelements, wobei das Metallelement eine Form bildet, die die fertige optische Oberfläche des monolithischen optischen Linsenelements nachbildet,
wobei vor dem Bereitstellen des monolithischen optischen Linsenelements (2) die fertige optische Oberfläche (4) des monolithischen optischen Linsenelements (2) durch Verwenden eines Digitaloberflächenbearbeitung(Digital Surfacing)-Verfahrens erhalten wird.

2. Verfahren nach Anspruch 1, wobei die fertige optische Oberfläche (4) eine optische Gleitsichtoberfläche ist.

3. Verfahren nach Anspruch 1 oder 2, wobei die fertige optische Oberfläche (4) Folgendes umfasst:
- einen Brechungsbereich mit einer ersten Krümmung und
- mehrere optische Elemente (8), die auf wenigstens einem Teil der fertigen optischen Oberfläche platziert sind, wobei jedes optische Element (8) wenigstens eine zweite Krümmung aufweist.

4. Verfahren nach einem der vorhergehenden Ansprüche, wobei das Verfahren ferner, nachdem das monolithische optische Linsenelement (2) und das Metallelement separiert wurden, Entfernen der elektrisch leitfähigen Materialbeschichtung von dem Metallelement umfasst.

5. Verfahren nach einem der vorhergehenden Ansprüche, wobei die Beschichtung aus elektrisch leitfähigem Material (10) eine Dicke größer als oder gleich 1 nm und kleiner als oder gleich 5 µm aufweist.

6. Verfahren nach einem der vorhergehenden Ansprüche, wobei das elektrisch leitfähige Material Kupfer ist.

7. Verfahren nach einem der Ansprüche 1 bis 5, wobei das elektrisch leitfähige Material ein silberbasiertes Material oder Silber ist.

8. Verfahren nach einem der vorhergehenden Ansprüche, wobei das elektrisch leitfähige Material durch Verwenden eines Gasphasenabscheidungsverfahrens oder eines Sputter-Verfahrens oder eines Sprühabscheidungsverfahrens oder eines Atomlagenabscheidungsverfahrens erhalten wird.

9. Verfahren nach einem der vorhergehenden Ansprüche, wobei das Metallelement durch Verwenden eines elektrochemischen Verfahrens erhalten wird.

10. Verfahren nach einem der vorhergehenden Ansprüche, wobei das Metallelement eine Nickellegierung ist.

11. Verfahren nach einem der vorhergehenden Ansprüche, wobei das Metallelement eine Dicke größer als oder gleich 0.1 mm und kleiner als oder gleich 5 mm aufweist.

12. Verfahren nach einem der vorhergehenden Ansprüche, wobei vor dem Bereitstellen des monolithischen optischen Linsenelements die fertige optische Oberfläche des monolithischen optischen Linsenelements durch Verwenden eines Spritzgießverfahrens oder eines Gießverfahrens erhalten wird.

13. Form (20), die durch Bereitstellen eines monolithischen optischen Linsenelements (2) mit wenigstens einer fertigen optischen Oberfläche (4) erhalten wird, wobei das monolithische optische Linsenelement (2) aus einem organischen Material gefertigt wird;
- Beschichten der fertigen optischen Oberfläche (4) mit einem elektrisch leitfähigen Material (10);
- Abscheiden einer Schicht aus Metall auf der beschichteten fertigen optischen Oberfläche, um ein Metallelement mit einer Oberfläche zu produzieren, die eine Nachbildung der fertigen optischen Oberfläche ist;
- Separieren des monolithischen optischen Linsenelements (2) und des Metallelements, wobei das Metallelement eine Form bildet, die die fertige optische Oberfläche des monolithischen optischen Linsenelements nachbildet,
wobei vor dem Bereitstellen des monolithischen optischen Linsenelements (2) die fertige optische Oberfläche (4) des monolithischen optischen Linsenelements (2) durch Verwenden eines Digitaloberflächenbearbeitungsverfahrens erhalten wird.

## Revendications

1. Procédé de production d'un moule (20), dans lequel le procédé comprend :
- la fourniture d'un élément de lentille optique monolithique (2) présentant au moins une surface optique finie (4), l'élément de lentille optique monolithique (2) étant fait d'un matériau organique ;
- le revêtement de la surface optique finie (4) par un matériau électriquement conducteur (10) ;
- le dépôt, sur la surface optique finie revêtue, d'une couche de métal pour réaliser un élément métallique ayant une surface qui est une réplication de la surface optique finie ;
- la séparation de l'élément de lentille optique monolithique (2) et de l'élément métallique, l'élément métallique formant un moule répliquant la surface optique finie de l'élément de lentille optique monolithique,
dans lequel, avant de fournir l'élément de lentille optique monolithique (2), la surface optique finie (4) dudit élément de lentille optique monolithique (2) est obtenue à l'aide d'un procédé de surfaçage numérique.

2. Procédé selon la revendication 1, dans lequel la surface optique finie (4) est une surface optique progressive.

3. Procédé selon la revendication 1 ou 2, dans lequel la surface optique finie (4) comprend :
- une zone de réfraction présentant une première courbure et
- une pluralité d'éléments optiques (8) disposés sur au moins une partie de la surface optique finie, chaque élément optique (8) présentant au moins une deuxième courbure.

4. Procédé selon l'une quelconque des revendications précédentes, dans lequel le procédé comprend en outre, après avoir séparé l'élément de lentille optique monolithique (2) et l'élément métallique, l'élimination du revêtement de matériau électriquement conducteur de l'élément métallique.

5. Procédé selon l'une quelconque des revendications précédentes, dans lequel le revêtement de matériau électriquement conducteur (10) a une épaisseur supérieure ou égale à 1 nm et inférieure ou égale à 5 µm.

6. Procédé selon l'une quelconque des revendications précédentes, dans lequel le matériau électriquement conducteur est du cuivre.

7. Procédé selon l'une quelconque des revendications 1 à 5, dans lequel le matériau électriquement conducteur est un matériau à base d'argent ou de l'argent.

8. Procédé selon l'une quelconque des revendications précédentes, dans lequel le matériau électriquement conducteur est obtenu en utilisant un procédé de dépôt en phase vapeur ou un procédé de pulvérisation cathodique ou un procédé de dépôt par pulvérisation ou un procédé de dépôt de couche atomique.

9. Procédé selon l'une quelconque des revendications précédentes, dans lequel l'élément métallique est obtenu en utilisant un procédé électrochimique.

10. Procédé selon l'une quelconque des revendications précédentes, dans lequel l'élément métallique est un alliage de nickel.

11. Procédé selon l'une quelconque des revendications précédentes, dans lequel l'élément métallique a une épaisseur supérieure ou égale à 0,1 mm et inférieure ou égale à 5 mm.

12. Procédé selon l'une quelconque des revendications précédentes, dans lequel, avant de fournir l'élément de lentille optique monolithique, la surface optique finie dudit élément de lentille optique monolithique est obtenue en utilisant un procédé d'injection dans un moule ou un procédé de coulée.

13. Moule (20) obtenu en fournissant un élément de lentille optique monolithique (2) ayant au moins une surface optique finie (4), l'élément de lentille optique monolithique (2) étant fait d'un matériau organique ;
- le revêtement de la surface optique finie (4) par un matériau électriquement conducteur (10) ;
- le dépôt, sur la surface optique finie revêtue, d'une couche de métal pour réaliser un élément métallique ayant une surface qui est une réplication de la surface optique finie ;
- la séparation de l'élément de lentille optique monolithique (2) et de l'élément métallique, l'élément métallique formant un moule répliquant la surface optique finie de l'élément de lentille optique monolithique,
dans lequel, avant de fournir l'élément de lentille optique monolithique (2), la surface optique finie (4) dudit élément de lentille optique monolithique (2) est obtenue par un procédé de surfaçage numérique.
